# EUROPÄISCHE PATENTSCHRIFT

(11) **EP 1 902 239 B1**
(45) Veröffentlichungstag und Bekanntmachung des Hinweises auf die Patenterteilung: **13.01.2010**
(21) Anmeldenummer: 06776137.9
(22) Anmeldetag: 06.07.2006
(51) Int. Cl.: F16J 15/34

(54) **GLEITRINGDICHTUNGSANORDNUNG**
SLIDE RING SEAL ARRANGEMENT
SYSTEME DE GARNITURE D'ETANCHEITE A BAGUES COULISSANTES

(30) Priorität: 14.07.2005 DE 202005011137 U
(43) Veröffentlichungstag der Anmeldung: 26.03.2008
(73) Patentinhaber: Burgmann Industries GmbH & Co. KG, 82515 Wolfratshausen (DE)
(72) Erfinder: SCHRÜFER, Andreas, 82515 Wolfratshausen (DE); OPPLER, Manfred, 82069 Neufahrn (DE); LEDERER, Günther, 82538 Geretsried (DE); LAXANDER, Armin, 82205 Gilching (DE); LANG, Klaus, 82547 Beuerberg (DE); JOHANNES, Rolf, 82515 Wolfratshausen (DE); FESL, Andreas, 83624 Otterfing (DE); DRÖSCHER, Peter, 82538 Geretsried (DE)
(74) Vertreter: Schmidt, Horst
(86) Internationale Anmeldenummer: PCT/EP2006/006635
(87) Internationale Veröffentlichungsnummer: WO 2007/006493

(56) Entgegenhaltungen:
- EP-A2- 1 271 023
- FR-A- 2 495 727
- US-A- 5 529 317

## Beschreibung

Die Erfindung betrifft eine Gleitringdichtungsanordnung und insbesondere eine gasgeschmierte Gleitringdichtungsanordnung, die besondere Vorteile beim Einsatz unter hohen thermischen und Druckbelastungen bietet.

Bei herkömmlichen Gleitringdichtungsanordnungen (US-A-4212475) sind die zusammenwirkenden Gleitringe durch Sekundärdichtungselemente gegenüber benachbarten Bauteilen abgedichtet und abgestützt. Bei den Sekundärdichtungselementen handelt es sich zumeist um O-Ringe oder Lippendichtringe aus nachgiebigem Material. Da sich die Gleitringe bei Betrieb nicht in einem druckentlasteten Zustand befinden, können an den Stellen, an denen die Gleitringe über die Sekündardichtungselemente an den benachbarten Bauteilen abgestützt sind, infolge von z.B. wärmeausdehnungsbedingten Relativbewegungen Reibkräfte auftreten, die je nach Höhe der herrschenden Abstützkräfte mehr oder weniger grosse radiale Kräfte hervorrufen können. Diese Kräfte können auf den betreffenden Gleitring ein solches Kippmoment bei Betrieb ausüben, das es zu einer Änderung der Dichtspaltgeometrie in einem Ausmass kommen kann, dass ein vorzeitiger Verschleiss der Gleitringe und/oder erhöhte Leckage eintreten kann. Zumindest kann dies zu unerwünschten Schwankungen im Betriebsverhalten der Gleitringdichtungsanordnung führen. Aus der EP 1271023 A ist ferner eine Gleitringdichtungsanordnung der gattungsgemässen Art bekannt, bei der der rotierende Gleitring in Lossitz gehalten und an einem Stützelement aus einem harten Material mit ähnlichem Wäremausdehungsverhalten wie das Material des Gleitringes dichtend abgestützt ist. Es wird erwähnt, dass durch eine geeignete Bemessung der Anlageverhältnisse des rotierenden Gleitringes am Stützelement die radialen Kräfte und damit deren Auswirkungen auf die Geometrie eines Dichtspaltes zwischen den Gleitringen minimiert werden können. Der stationäre Gleitring ist in der herkömmlichen Weise an einem Dichtungsgehäuse abgestützt und dagegen mittels eines O-Ringes abgedichtet.

Der Erfindung liegt die Aufgabe zugrunde, eine verbesserte Gleitringdichtungsanordnung der eingangs erwähnten Art zu schaffen, bei der die Einhaltung einer gewünschten Dichtspaltgeometrie gewährleistet ist. Insbesondere soll der schädliche Einfluss auf die Dichtspaltgeometrie von bei Betrieb durch Reibkräfte induzierten Kippmomenten minimiert werden.

Diese Aufgabe wird durch die Merkmale des Anspruches 1 gelöst. Die Erfindung stellt eine Verbesserung und Weiterentwicklung der aus der EP 1271023 A zu entnehmenden Anordnung dar. Anders als bei der bekannten Anordnung ist nicht nur der rotierende Gleitring, sondern ist auch der stationäre Gleitring in Lossitz gehalten, so dass beiden Gleitringen eine selbstausrichtende Eigenschaft unter den darauf einwirkenden Kräften verliehen ist. Ausserdem sind beide Gleitringe an ringförmigen planen Anlageflächen abgestützt, die Dichtflächen schaffen, wobei die Anpresskräfte nicht nur genau vorher bestimmbar, sondern auch minimiert sind. An der Abstützung beider Gleitringe und deren Abdichtung gegenüber benachbarten Bauteilen der Gleitringdichtungsanordnung sind keine Sekundärdichtungselemente aus nachgiebigem Material beteiligt. Vielmehr sind solche Elemente grundsätzlich entbehrlich, da die Anlageflächen selbst Dichtungsfunktion ausüben, wenn darauf axiale Kräfte entsprechend der erfindungsgemässen Bemessungsregel ausgeübt werden. Die Abmessung d₁ - d₂ jeder Anlagefläche sollte ≤ 10 mm, vorzugsweise zwischen 0,2 und 2,0, höchst vorzugsweise etwa 0,6 mm betragen. Die Anlageflächen können eine bevorzugte annähernd schneidkantenenartige Konfiguration aufweisen. Zur Verbesserung der Dichtwirkung sieht eine Weiterbildung der Erfindung vor, dass jede Anlagefläche um ein Toleranzmass ≤ 10 µm in Umfangsrichtung und ≤ 5 µm in radialer Richtung plan ausgebildet ist. Dabei wird bevorzugt, dass eine von den jeweiligen Betriebsumständen unabhängige Sekundär-Vorspannkraft, mit der der rotierende Gleitringe zusätzlich zu einer zwischen den beiden Gleitringen herrschenden Haupt-Vorspannkraft gegen seine Anlagefläche federvorgespannt ist, zwischen 0,2 N und 10 N pro mm Umfangslänge an der stirnseitigen Stelle des rotierenden Gleitringes beträgt, an der die Sekundär-Federvorspannkraft angreift. Dies gewährleistet, dass auch bei Stillstand und geringen hydraulichen Betriebsdrücken eine ausreichende Dichtwirkung an dieser Anlagefläche vorliegt. Bezüglich anderer Weiterbildungen der Erfindung wird auf die Ansprüche verwiesen.

Die Erfindung wird nachfolgend anhand einer Ausführungsform und der Zeichnung näher erläutert. Es zeigen:
- Fig. 1: in längsgeschnittener Teilansicht eine Gleitringdichtungsanordnung gemäss der Erfindung nach Einbau in einer abzudichtenden Gerätschaft,
- Fig. 2: in vergrösserter Ansicht ein erstes Detail der Gleitringdichtungsanordnung nach Fig.1, und
- Fig. 3: in vergrösserter Ansicht ein zweites Detail der Gleitringdichtungsanordnung nach Fig.1.

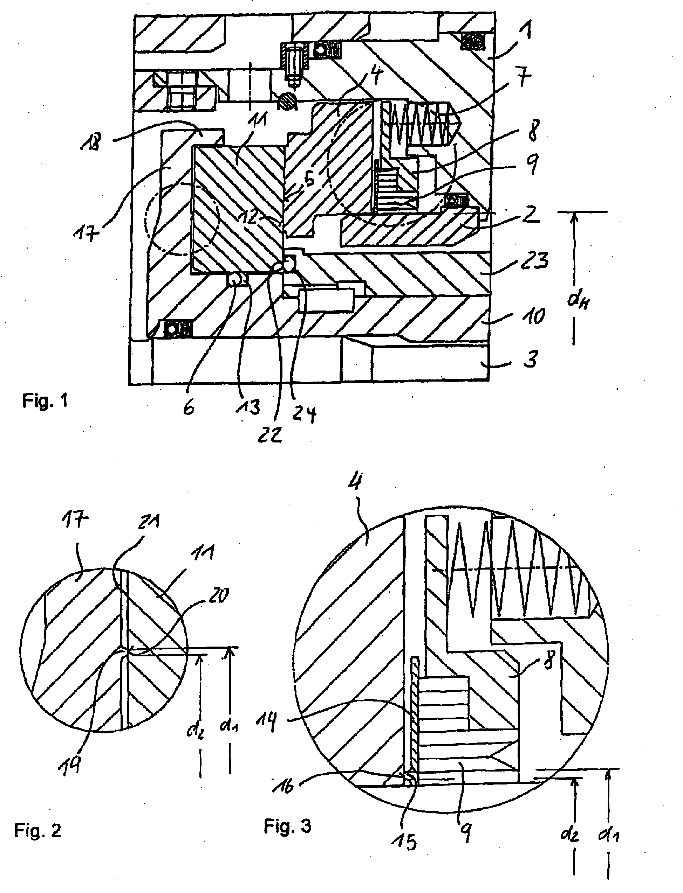

Fig. 1 zeigt die Gleitringdichtungsanordnung nach der Erfindung in geschnittener Ansicht längs der oberen Hälfte in Bezug auf die Mittenlängsachse. Das Bezugszeichen 1 betrifft ein Dichtungsgehäuse, das in einer Gehäusebohrung einer Gerätschaft (in der Zeichnung nur fragmentarisch gezeigt), z.B. eines Verdichters, angeordnet und darin in geeigneter Weise festgelegt werden kann. Eine Welle 3 ist durch die Gehäusebohrung geführt. Im Dichtungsgehäuse 1 ist ein stationärer Gleitring 4 axial beweglich auf einem hülsenförmigen Auflager 2 angeordnet, das vom Dichtungsgehäuse 1 axial absteht und entweder daran integral ausgebildet oder als separates Teil dichtend montiert ist.

An einer Stirnseite des stationären Gleitringes 4 ist eine Dichtfläche 5 ausgebildet. Der Gleitring 4 ist gegen Verdrehung relativ zum Dichtungsgehäuse 1 gesichert. Zu diesem Zweck kann ein an einer in der Zeichnung nicht gezeigten Umfangsstelle vom Dichtungsgehäuse 1 axial abstehender Mitnehmerbolzen (nicht gezeigt) in eine am stationären Gleitring 4 vorgesehene ausgerichtete Ausnehmung (ebenfalls nicht gezeigt) mit einem geeignet bemessenen Spiel eingreifen. Dadurch ist der stationäre Gleitring 4 zwar grundsätzlich an einer Drehung gegenüber dem Dichtungsgehäuse 1 gehindert, jedoch bleibt er innerhalb des Spieles frei beweglich, so dass er sich in axialer und radialer Richtung ausrichten kann. Der stationäre Gleitring 4 ist mithin mit Lossitz am Dichtungsgehäuse 1 gehalten.

Eine Haupt-Vorspanneinrichtung, z.B. in Gestalt einer Haupt-Vorspannfeder 7, die sich mit einem Ende am Dichtungsgehäuse 1 abstützt, ist vorgesehen, um den stationären Gleitring 4 mit einer bestimmten Haupt-Vorspannkraft zu beaufschlagen. Es können mehrere umfänglich verteilt angeordnete Haupt-Vorspannfedern 7 vorgesehen sein. Die Erfindung ist auf die gezeigte Vorspanneinrichtung jedoch nicht beschränkt.

Wie in der Zeichnung dargestellt ist, ist die Haupt-Vorspannfeder 7 an ihrem anderen Ende an einem auf dem Auflager 2 axial beweglich aufgesetzten Kraftübertragungsring 8 abgestützt, der an seinem inneren Umfang eine Dichtung 9 aus nachgiebigem Material, wie Gummi, Elastomer oder einem Kohlenstoffmaterial, trägt, die in dichtender Beziehung mit dem äusseren Umfang des Auflagers 2 steht. An einer wenigstens im unbelasteten Zustand etwas aus dem Kraftübertragungsring 8 axial vorstehenden Bereich der Sekundärdichtung 9 liegt ein ebenfalls auf dem hülsenförmigen Auflager 2 axial beweglich aufgesetzter Stützring 14 an, bei dem es sich vorzugsweise um eine Ringscheibe aus einem Material mit ähnlichem Wärmeausdehnungsverhalten wie das des Gleitringes 4 handeln kann.

Von der freien, vom Kraftübertragungsring 8 abgewandten Stirnseite des Stützringes 14 ragt axial ein ringförmiger Vorsprung 15 ab, der, wie dies in Fig. 3 gezeigt ist, eine ringförmige Anlageflächen 16 in einer radialen Ebene schafft. An der Anlagefläche 16 liegt der stationäre Gleitring 4 mit seiner von der Dichtfläche 5 abgewandten Stirnseite 21 an und wird hierdurch axial abgestützt. Gleichzeitig wird auf diese Weise die Haupt-Vorspannkraft der Vorspannfeder 7 auf den stationären Gleitring 4 übertragen.

Auf einer mit der Welle 3 in geeigneter Weise drehfest verbundenen Buchse 10 ist ein rotierender Gleitring 11 mit Lossitz aufgesetzt. Der Gleitring 11 weist an einer Stirnseite eine Dichtfläche 12 zum Zusammenwirken mit der Dichtfläche 5 des stationären Gleitringes 4 auf. In einer Nut 13 im äusseren Umfang der Buchse 10 ist ein Mitnehmerring 6 angeordnet, der in reibschlüssigem Eingriff mit dem inneren Umfang des Gleitrings 11 steht, um zwischen der Buchse 10 und dem Gleitring 11 eine solche Drehkraft übertragende Beziehung zu schaffen, dass einerseits der Gleitring 11 bei Rotation der Buchse 10 in Drehung versetzt wird, während andererseits die durch den Lossitz geschaffene Beweglichkeit des Gleitringes 11 nicht oder nur unwesentlich hierdurch beeinträchtigt wird. Bei dem Mitnehmerring 6 kann es sich um einen O-Ring aus einem gummielastischen Material handeln, dem jedoch keine oder eine nur vernachlässigbar geringe Dichtwirkung zukommen braucht. Anstelle eines O-Ringes kann auch ein ringförmiges Wendelfederelement mit schräger Wendelung vorgesehen sein. Solche Wendelfederelemente sind dem Fachmann grundsätzlich bekannt und brauchen daher nicht näher erläutert werden.

Der Mitnehmerring 6 übt ferner eine zentrierende Wirkung auf den Gleitring 11 aus. Die Erfindung Ist auf die vorbeschriebene Art der Drehkraftübertragung von der Buchse 10 auf den Gleitring 11 nicht beschränkt. Vielmehr können auch andere diese Funktion übernehmenden Mittel vorgesehen werden. Vorzugsweise hat der rotierende Gleitring 11 eine rechteckförmige Querschnittskonfiguration.

Von der Buchse 10 steht radial nach aussen ein Flansch- oder Stützteil 17 ab, an dem aussenumfänglich ein Kragen oder eine Abschirmung 18 angeformt sein kann, die den Gleitring 11 wenigstens teilweise aussenumfänglich übergreift und gegen schädliche Umgebungseinflüsse abschirmen kann. Zwischen den benachbarten Wandbereichen des Gleitringes 11 einesteils und des Stützteiles 17 und der Abschirmung 18 andererseits ist ein ausreichendes Spiel vorgesehen, so dass die Beweglichkeit des Gleitringes 11 innerhalb geeigneter Spieltoleranzen nicht eingeschränkt ist.

Vom Stützteil 17 ragt axial ein ringförmiger Vorsprung 19 ab, der, wie dies in Fig. 2 gezeigt ist, eine ringförmige Anlagefläche 20 in einer radialen Ebene, ähnlich wie die ringförmige Anlagefläche 16 am Vorsprung 15 schafft. An der Anlagefläche 20 liegt der rotierende Gleitring 11 mit seiner von der Dichtfläche 12 abgewandten Stirnseite 21 an und ist hierdurch axial abgestützt und gegenüber dem Stützteil 17 abgedichtet.

Zwischen den einander zugewandten, im wesentlichen radial ausgerichteten Gleitflächen 5, 12 der Gleitringe 4, 11 wird bei Betrieb ein Dichtspalt gebildet; der die Gleitflächen 5, 12 in einem berührungslosen Abstand voneinander hält. Bei Stillstand der Welle 3 werden die Gleitflächen 5, 12 dagegen durch die Haupt-Vorspannkraft der Vorspannfeder 7 in dichtendem Eingriff miteinander gedrückt. Vorzugsweise sind in wenigstens einer der Gleitflächen 5, 12 förderwirksame Strukturen eingebracht, um ein gasförmiges abzudichtendes Medium zwischen die Gleitflächen 5, 12 zu pumpen und dadurch die Dichtspaltbildung zu fördern. Derartige förderwirksame Strukturen sind dem Fachmann bekannt und brauchen hier nicht näher erläutert zu werden. Es kann z.B. auf BURGMANN, Gasgeschmierte Gleitringdichtungen, Selbstverlag 1988, Seiten 16 ff. verwiesen werden.

Bevorzugte Materialien für die Gleitringe 4,11 sind Hartmaterialien wie Wolframkarbid, Siliciumkarbid, Siliciumnitrit, sowie tribologisch wirksame Materialien, wie Kohlenstoffmaterial, jeweils in geeigneter Paarung.

Durch unterschiedliche Wärmedehnungen und andere Faktoren, wie mechanische Belastungen, können bei Betrieb z.B. durch Reibeffekte radial gerichtete Kräfte oder solche mit radialer Komponente auf die Gleitringe 4, 11, einwirken, die zu einem Kippen in oder gegen die Uhrzeigerrichtung eines oder beider Gleitringe 4, 11 und damit zu einer Änderung der Geometrie des Dichtspaltes zwischen den Dichtflächen 5, 12 führen können.

Es wurde festgestellt, dass diese radialen Kräfte minimiert werden können, wenn an beiden Anlageflächen 16, 20 ein Belastungsverhältnis (d₁²-d_{H}²) (d₁² -d₂²) ≤ 2,0 vorzugsweise zwischen 0,8 und 2,0, höchst vorzugsweise zwischen 1,0 und 1,5 und weiter vorzugsweise etwa 1,3 eingehalten ist. In dieser Beziehung bedeuten: d₁ = äusserer Durchmesser der betreffenden Anlagefläche 16 bzw. 20, d₂ = innerer Durchmesser der betreffenden Anlagefläche 16 bzw. 20, d_{H} = Durchmesser einer dem Druck des abzudichtenden Mediums ausgesetzten hydraulischen Wirkfläche der Gleitringpaarung. Der auf die Wirkfläche ausgeübte hydraulische Druck bewirkt eine Kraft, die sich den herrschenden Vorspannkräften überlagert, unter der die Gleitringe 4, 11 an den betreffenden Anlageflächen 16, 20 anliegen. Bei einer Relativbewegung zwischen dem betreffenden Gleitring und der Anlagefläche kann diese Kraft ein radiale Komponente mit der vorgenannten schädlichen Wirkung ausüben.

Erfindungsgemäss sind die Abmessungen der beiden Anlageflächen 16, 20 ferner auf ein Mass (d₁ - d₂) ≤ 10 mm, vorzugsweise zwischen 0,2 und 2,0, höchst vorzugsweise etwa 0,6 mm begrenzt, so dass die Anlageflächen annähernd schneidkantenartigen Charakter haben können.

Wenn die vorerwähnten Bedingungen eingehalten sind, wird einerseits gewährleistet, dass die resultierende Kraft ausreichend gross ist, um eine zuverlässige dichtende Beziehung zwischen den Gleitringen 4, 11 und Anlageflächen 16, 20 zu erhalten, so dass ein Leckage längs der Anlageflächen verhindert oder wenigstens auf einen minimal geringen Betrag gehalten ist. Daher können diese die Funktion einer Sekundärdichtung übernehmen. Die dichtende Beziehung wird ferner verbessert, wenn jede ringförmige Anlagefläche 16, 20 um ein Toleranzmass ≤ 10 µm in Umfangsrichtung und ≤ 5 µm in radialer Richtung plan ausgebildet ist. Andererseits können die in Folge z.B. unterschiedlicher radialer Wärmedehnungen auftretenden radialen Kräfte an den Anlagefläche 16, 20 nicht so gross werden, dass ein dadurch auf die Gleitringe 4, 11 ausgeübtes Kippmoment zu einer unzulässigen Abweichung von der idealen parallelen Ausrichtung der Gleitflächen 5, 12 bei Betrieb führen kann. Zum Beispiel könnte ein in der Zeichnung in Uhrzeigersinn gerichtetes Kippmoment auf den rotierenden Gleitring 11 unter einer radial nach aussen gerichteten radialen Kraft zur Bildung eines Dichtspaltes zwischen den Gleitflächen 5, 12 mit A-förmigem Querschnitt führen, während ein Kippmoment in Gegenuhrzeigerrichtung die Bildung eines V-Spaltes zur Folge hätte. Ähnliche Folgen würden bei entsprechenden Kippmomenten seitens des stationären Gleitringes 4 vorliegen. Jede Abweichung von der idealen parallelen Spaltkonfiguration hat im allgemeinen erhöhten Verschleiss an den Dichtlächen 5, 12 und eine unkontrollierte Leckage längs des Dichtspaltes zur Folge. Mit der Erfindung wird erreicht, dass eine V- oder A-Spalt-Bildung ganz oder wenigstens weitestgehend verhindert wird, so dass eine hierdurch bedingte Einschränkung der Lebensdauer und/oder Beeinträchtigung der Betriebszuverlässigkeit der Gleitringdichtungsanordnung vermieden werden.

Ein weitere Folge der vorerwähnten Auslegung der Anlageflächen 16, 20 ist, dass diese in einem annähernd gleichen radialen Abstand von der Mittenlängsachse der Gleitringdichtungsanordnung zu liegen kommen, was eine entsprechend weitgehend momentenfreie Weiterleitung der axialen Kräfte von einer Anlagefläche 16 zur anderen Anlagefläche 20 ermöglicht.

Wie in der Zeichnung dargestellt ist, kann ferner in einer Ringnut 22 in der Endfläche einer auf der Büchse 10 zur gemeinsamen Drehung damit aufgesetzten Hülse 23 ein Sekundär-Vorspannelement 24 aufgenommen sein, bei dem es sich vorzugsweise um ringförmiges Wendelfederelement mit schräger Wendelung handeln kann, worauf schon an anderer Stelle hingewiesen wurde. Das Sekundär-Vorspannelement 24 stützt sich umfänglich an der benachbarten Stirnseite des rotierenden Gleitringes 11 ab und beaufschlagt diesen mit einer von der Haupt-Vorspannfeder 7 unabhängigen bestimmten axialen Sekundär-Vorspannkraft.

Im Rahmen der Erfindung wurde festgestellt, dass die Sekundär-Vorspannkraft zwischen etwa 0,2 und 10 N/mm Umfangslänge der umfänglichen Stelle betragen sollte, an der sich das Sekundär-Vorspannelement 24 am rotierenden Gleitring 11 abstützt. Dies schafft eine verbesserte abdichtende Beziehung zwischen der Anlagefläche 20 und der angrenzenden Stirnseite des rotierenden Gleitringes 11 bei Stillstand der Gleitringdichtungsanordnung.

Vorausgehend wurde die Erfindung an Hand einer Ausführungsform beschrieben, bei der die Anlageflächen an Vorsprüngen der betreffenden Stützteile vorgesehen sind. Es versteht sich jedoch, dass die Anlageflächen, wenn erwünscht, auch an den Gleitringen selbst ausgebildet sein könnten. Ausserdem könnten die Verhältnisse am rotierenden und stationären Gleitring unterschiedlich sein. Die Vorsprünge können entweder integraler Bestandteil der betreffenden Stützteiles bzw. Gleitringes oder daran in geeigneter Weise nachträglich befestigte Einsetzteile darstellen. Die Verwendung von Einsetzteilen ermöglichte deren bevorzugte Ausbildung aus verschleissarmen Materialien der vorgenannten Art. Obschon die Erfindung besondere Vorteile bei Anwendung für eine gasgeschmierte Gleitringdichtungsanordnung bietet, könnte sie auch bei flüssigkeitsgeschmierten Anordnungen zum Einsatz kommen, um thermisch bedingte Verwerfungen von einer vorgegebenen Dichtspaltgeometrie auszuschalten oder wenigstens zu minimieren. Die Haupt-Vorspanneinrichtung könnte anstelle von auf den stationären auf den rotierenden Gleitring einwirken, der dann axial verschieblich auf dem rotierenden Bauteil angeordnet werden müsste.

## Patentansprüche

1. Gleitringdichtungsanordnung, mit einem drehfesten Gleitring (4) und einem zur gemeinsamen Drehung mit einem rotierenden Bauteil (3,10) vorgesehenen Gleitring (11), welche jeweils in Lossitz gehalten sind und zusammenwirkende, im wesentlichen radial ausgerichtete, mit einer Haupt-Vorspannkraft in Eingriff miteinander vorgespannte Dichtflächen (5,12) aufweisen, wobei jeder Gleitring an seiner von der Dichtfläche abgewandten Stirnseite an einem betreffenden Stützteil (14,17) eines Paares von Stützteilen, von denen eines zur gemeinsamen Drehung mit dem rotierenden Bauteil und das andere drehfest vorgesehen ist, über eine zwischen dem betreffenden Stützteil und der benachbarten Stirnseite des betreffenden Gleitringes vorgesehene ringförmige Anlagefläche (16,20) axial abgestützt ist, an der ein Belastungsverhältnis (d₁²-d_{H}²) / (d₁² -d₂²) von ≤ 2,0, vorzugsweise zwischen 0,8 und 2,0, höchst vorzugsweise zwischen 1,0 und 1,5, weiter vorzugsweise etwa 1,3 eingehalten ist, wobei die Abmessung (d₁ - d₂) jeder Anlagefläche (16,20) ≤ 10 mm, vorzugsweise zwischen 0,2 und 2,0, höchstvorzugsweise etwa 0,6 mm beträgt,
worin bedeuten:
d₁ = äusserer Durchmesser der Anlagefläche,
d₂ = innerer Durchmesser der Anlagefläche,
d_{H} = Durchmesser der dem Druck des abzudichtenden Mediums ausgesetzten hydraulischen Wirkfläche

2. Gleitringdichtungsanordnung nach Anspruch 1, **dadurch gekennzeichnet, dass** jede Anlagefläche (16,20) um ein Toleranzmass ≤ 10 µm in Umfangsrichtung und ≤ 5 µm in radialer Richtung plan ausgebildet ist.

3. Gleitringdichtungsanordnung nach Anspruch 1 oder 2, **dadurch gekennzeichnet, dass** wenigstens eine der Anlageflächen (16,20) an einem von der Stirnseite des betreffenden Gleitringes (4,11) axial abstehenden Vorsprung (15,19) vorgesehen ist.

4. Gleitringdichtungsanordnung nach einem der Ansprüche 1 oder 2, **dadurch gekennzeichnet, dass** wenigstens eine der Anlageflächen (16,20) an einem vom betreffenden Stützteil (14,17) axial abstehenden Vorsprung vorgesehen ist.

5. Gleitringdichtungsanordnung nach einem der vorhergehenden Ansprüche, **dadurch gekennzeichnet, dass** eine Sekundär-Vorspannkraft, mit der der rotierende Gleitringe (11) gegen die betreffende Anlagefläche (20) zusätzlich vorgespannt ist, zwischen 0,2 N und 10 N pro mm Umfangslänge des umfänglichen Anlagebereiches eines Sekundär-Vorspannelementes (24) am rotierenden Gleitring beträgt.

6. Gleitringdichtungsanordnung nach Anspruch 5, **dadurch gekennzeichnet, dass** das Sekundär-Vorspannelement (24) eine ringförmiges Wendelfederelement mit schräger Wendelung umfasst.

7. Gleitringdichtungsanordnung nach einem der vorhergehenden Ansprüche, **dadurch gekennzeichnet, dass** in der Dichtfläche (5,12) von wenigstens einem der Gleitringe (4,11) förderwirksame Strukturen eingebracht sind.

## Claims

1. A slide ring seal assembly, comprising a rotationally fixed slide ring (4) and a slide ring (11) for common rotation with a rotating component (3, 10), which are respectively loosely retained and have co-operating, substantially radially directed sealing faces (5, 12) mutually biased in engagement with a main biasing force, wherein each slide ring is axially supported, at its front side facing away from its sealing face, at a corresponding support component (14, 17) of a pair of support components, one of which being provided for a common rotation with the rotating component and one of which being provided rotationally fixed, via an annular contact face (16, 20) provided between the respective support component and the adjacent front side of the respective slide ring, at which contact face a load ratio (d₁²―d_{H}²)/(d₁²-d₂²) of ≤ 2.0, preferably between 0.8 and 2.0, most preferably between 1.0 and 1.5; further preferably approx. 1.3 is observed, wherein the dimension (d₁-d₂) of each contact face (16, 20) is ≤ 10 mm, preferably between 0.2 and 2.0, most preferably approx. 0.6 mm,
wherein
d₁ = outer diameter of the contact face,
d₂ = inner diameter of the contact face,
d_{H} = diameter of hydraulically effective face being subjected to the pressure of the medium to be sealed.

2. The slide ring seal assembly of claim 1, **characterized in that** each contact face (16, 20) is formed planarly with a tolerance ≤ 10 µm in the circumferential direction and ≤ 5 µm in the radial direction.

3. The slide ring seal assembly of claim 1 or 2, **characterized in that** at least one of the contact faces (16, 20) is provided at an projection (15, 19) axially protruding from the front side of the respective slide ring (4, 11).

4. The slide ring seal assembly of one of claims 1 or 2, **characterized in that** at least one of the contact faces (16, 20) is provided at a projection axially protruding from the respective support component (14, 17).

5. The slide ring seal assembly of one of the preceding claims, **characterized in that** a secondary biasing force, with which the rotating slide rings (11) are additionally biased against the respective contact face (20), amounts to between 0.2 N and 10 N per mm circumference of the circumferential contact portion of a secondary biasing member (24) at the rotating slide ring.

6. The slide ring seal assembly of claim 5, **characterized in that** the secondary biasing member (24) comprises an annular, spiral coiled spring member having an oblique spiral coil.

7. The slide ring seal assembly of one of the preceding claims, **characterized in that** conveyance-promoting structures are included in the sealing face (5, 12) of at least one of the slide rings (4, 11).

## Revendications

1. Système de garniture d'étanchement à bagues coulissantes, comprenant une bague coulissante (4) à verrouillage rotatif et une bague coulissante (11) prévue pour tourner conjointement à une pièce structurelle rotative (3, 10), lesdites bagues étant respectivement retenues avec assise lâche, et comportant des surfaces d'étanchement (5, 12) en coopération mutuelle, orientées pour l'essentiel dans le sens radial et précontraintes, par une force de précontrainte principale, pour venir mutuellement en prise, chaque bague coulissante prenant axialement appui, par sa face frontale tournée à l'opposé de la surface d'étanchement, contre une pièce d'appui considérée (14, 17) d'une paire de pièces d'appui dont l'une est prévue pour tourner conjointement à la pièce structurelle rotative, et l'autre est prévue avec verrouillage rotatif, par l'intermédiaire d'une surface annulaire de contact (16, 20) prévue entre la pièce d'appui considérée et la face frontale attenante de la bague coulissante considérée, et sur laquelle est entretenu un rapport de contraintes (d₁²-d_{H}²/d₁²-d₂²) de ≤ 2,0, de préférence entre 0,8 et 2,0, avec préférence maximale entre 1,0 et 1,5, de préférence encore d'environ 1,3, le dimensionnement (d₁-d₂) de chaque surface de contact (16, 20) ≤ 10 mm, de préférence entre 0,2 et 2,0, d'environ 0,6 mm avec préférence maximale,
s'accompagnant des significations suivantes :
d₁ = diamètre extérieur de la surface de contact,
d₂ = diamètre intérieur de la surface de contact,
d_{H} = diamètre de la surface hydraulique opérante exposée à la pression du fluide vis-à-vis duquel l'étanchéité doit être assurée.

2. Système de garniture d'étanchement à bagues coulissantes, selon la revendication 1, **caractérisé par le fait que** chaque surface de contact (16, 20) est de réalisation plane, moyennant une cote de tolérance ≤ 10 µm dans le sens périphérique et ≤ 5 µm dans le sens radial.

3. Système de garniture d'étanchement à bagues coulissantes, selon la revendication 1 ou 2, **caractérisé par le fait qu'**au moins l'une des surfaces de contact (16, 20) est prévue sur une protubérance (15, 19) saillant axialement au-delà de la face frontale de la bague coulissante considérée (4, 11).

4. Système de garniture d'étanchement à bagues coulissantes, selon l'une des revendications 1 ou 2, **caractérisé par le fait qu'**au moins l'une des surfaces de contact (16, 20) est prévue sur une protubérance saillant axialement au-delà de la pièce d'appui considérée (14, 17).

5. Système de garniture d'étanchement à bagues coulissantes, selon l'une des revendications précédentes, **caractérisé par le fait qu'**une force de précontrainte secondaire, par laquelle la bague coulissante rotative (11) est additionnellement précontrainte contre la surface de contact considérée (20), est comprise entre 0,2 N et 10 N par mm de longueur périphérique de la zone périphérique de contact d'un élément de précontrainte secondaire (24), sur ladite bague coulissante rotative.

6. Système de garniture d'étanchement à bagues coulissantes, selon la revendication 5, **caractérisé par le fait que** l'élément de précontrainte secondaire (24) est un élément annulaire à ressort spiroïdal, dont les spires sont inclinées.

7. Système de garniture d'étanchement à bagues coulissantes, selon l'une des revendications précédentes, **caractérisé par le fait que** des structures à effet de refoulement sont intégrées dans la surface d'étanchement (5, 12) d'au moins l'une des bagues coulissantes (4, 11).
